# EUROPEAN PATENT APPLICATION

(11) **EP 4 804 315 A1**
(43) Date of publication of application: **09.09.2026**
(21) Application number: 25161323.8
(22) Date of filing: 03.03.2025
(51) Int. Cl.: H01M 50/367

(54) **BATTERY HOUSING WITH SECTIONED UNIDIRECTIONAL VENTING PATH**

(71) Applicant: Volvo Truck Corporation, 405 08 Göteborg (SE)
(72) Inventor: IRANNEZHAD, Mike, 413 30 GÖTEBORG (SE); MOVAGHAR, Amirreza, 412 76 GÖTEBORG (SE)
(74) Representative: Kransell & Wennborg KB

(57) **Abstract**

A battery housing (100) comprising: a plurality of battery cells (102), each battery cell having a vent (202) positioned to face a first side (104) of the battery housing for releasing exhaust gas during a thermal runaway event; and a venting channel (106) arranged at the first side of the battery housing and configured to guide exhaust gas from the battery cells toward a venting outlet (108) of the battery housing; wherein the venting channel comprises a first channel portion (204) arranged to directly receive exhaust gas from the vents of the battery cells, and a second channel portion (206) arranged to transport exhaust gas to the venting outlet, the second channel portion being fluidly separated from the first channel portion along part of its length; and wherein a fluid connection (208) between the first and second channel portions is formed at an edge portion (110) of the first side of the battery housing.

## Description

### TECHNICAL FIELD

The disclosure relates generally to energy storage systems for vehicles. In particular aspects, the disclosure relates to a battery housing comprising a sectioned unidirectional venting path for venting heated gas and particles during a thermal runaway event. The disclosure can be applied to heavy-duty vehicles, such as trucks, buses, and construction equipment, among other vehicle types. The disclosure can also be applied to marine vessels and the like. Although the disclosure may be described with respect to a particular vehicle, the disclosure is not restricted to any particular vehicle.

### BACKGROUND

Thermal runaway in battery packs for vehicles refers to a chain reaction of escalating heat generation within the battery cells. This process can be triggered by factors like overcharging, internal short circuits, or physical damage. As the temperature rises, it can lead to a self-perpetuating cycle, causing cells to heat up rapidly, potentially leading to gas release, fire, or even explosion. Managing this runaway reaction is critical to prevent severe damage to the battery pack, vehicle, and surrounding environment.

In the event of a thermal runaway, efficient management of hot gases and particles within the battery pack is crucial to prevent rapid thermal spread. Strategically designed chimneys within the pack are utilized to guide and channel hot gases, ensuring controlled pathways that inhibit thermal propagation and limit the acceleration of the runaway process. Vents strategically positioned within the pack are set to open at specific pressures, enabling the release of accumulated hot gases. Meanwhile, specialized trapping mechanisms are deployed at designated locations within the pack to contain and prevent particles from exiting. This containment is essential to mitigate the risk of these particles igniting external gases, reducing potential hazards outside the battery pack. Accordingly, it is desirable to provide improved battery housing designs for mitigating damage caused by a thermal runaway event

### SUMMARY

According to a first aspect of the disclosure, it is provided a battery housing comprising: a plurality of battery cells, each battery cell having a vent positioned to face a first side of the battery housing for releasing exhaust gas during a thermal runaway event; and a venting channel arranged at the first side of the battery housing and configured to guide exhaust gas from the battery cells toward a venting outlet of the battery housing; wherein the venting channel comprises a first channel portion arranged to directly receive exhaust gas from the vents of the battery cells, and a second channel portion arranged to transport exhaust gas to the venting outlet, the second channel portion being fluidly separated from the first channel portion along part of its length; and wherein a fluid connection between the first and second channel portions is formed at an edge portion of the first side of the battery housing.

A technical benefit may include enabling controlled venting of exhaust gases during a thermal runaway event, thereby reducing the risk of pressure buildup and uncontrolled gas release. The separation of the venting channel into a first and second channel portion allows for improved gas flow management, ensuring that particles and heat are effectively dissipated before reaching the venting outlet. The fluid connection at an edge portion facilitates a unidirectional exhaust path, preventing backflow and optimizing particle trapping efficiency. Additionally, the arrangement of the venting channel on the first side of the battery housing helps streamline integration into vehicle designs while enhancing safety and thermal management.

Optionally, in some examples, including in at least one preferred example, the first channel portion is configured to be a lower channel portion, and the second channel portion is configured to be an upper channel portion. A technical benefit may include facilitating a chimney effect, where heated gases naturally rise to the upper portion, improving the efficiency of gas evacuation and reducing pressure buildup in the battery housing.

Optionally, in some examples, including in at least one preferred example, the second channel portion comprises particle trapping structures configured to prevent particles in exhaust gas from reaching the venting outlet. A technical benefit may include reducing the risk of particles escaping the battery housing and igniting external gases, thereby enhancing the safety and reliability of the battery pack.

Optionally, in some examples, including in at least one preferred example, the second channel portion is configured to guide the exhaust gas along a serpentine or curved path to slow down the gas flow and enhance particle trapping. A technical benefit may include increasing the residence time of the exhaust gas within the venting channel, allowing more effective cooling and improving particle separation before the gas reaches the venting outlet.

Optionally, in some examples, including in at least one preferred example, the particle trapping structures in the second channel portion are configured to induce vortices in the exhaust gas flow to direct particles toward the particle trapping structures. A technical benefit may include improving the efficiency of particle capture by generating localized turbulence, which increases the likelihood that particles will collide with and adhere to the trapping structures rather than escaping through the venting outlet.

Optionally, in some examples, including in at least one preferred example, the particle trapping structures comprise a series of structures arranged to capture particles of decreasing size along the flow direction of the second channel portion. A technical benefit may include enabling a multi-stage filtration process that prevents clogging by ensuring larger particles are captured first, while smaller particles are progressively trapped further along the channel, maintaining consistent gas flow and venting efficiency.

Optionally, in some examples, including in at least one preferred example, the particle trapping structures are made from a thermal-resistant material selected from the group consisting of plastic, ceramic, aluminum, and steel. A technical benefit may include ensuring the durability and effectiveness of the trapping structures under high-temperature conditions, preventing deformation or melting that could compromise the venting function during a thermal runaway event.

Optionally, in some examples, including in at least one preferred example, the particle trapping structures comprise vertically aligned ridges protruding from sidewalls of the second channel portion and alternatingly extending from opposing walls to form an overlapping configuration adapted to increase turbulence and enhance particle trapping efficiency. A technical benefit may include maximizing particle capture by disrupting the exhaust gas flow, forcing particles to change direction multiple times and increasing the likelihood that they will be intercepted and retained within the trapping structures.

Optionally, in some examples, including in at least one preferred example, the second channel portion comprises heat-dissipating surfaces arranged to reduce the temperature of the exhaust gas before it reaches the venting outlet. A technical benefit may include lowering the risk of heat damage to surrounding components and reducing the potential for ignition of flammable gases outside the battery housing by dissipating excess heat before the gas is expelled.

Optionally, in some examples, including in at least one preferred example, the battery cells are configured so that battery cell terminals are facing the second channel portion of the venting channel. A technical benefit may include improving the safety and integrity of the battery pack by minimizing exposure of the battery terminals to exhaust gas flow directly from a battery cell, thereby reducing the risk of electrical faults or short circuits caused by conductive particles.

Optionally, in some examples, including in at least one preferred example, the fluid connection between the first and second channel portions is located on a side of the battery housing opposite the location of the venting outlet. A technical benefit may include maximizing the length of the exhaust gas flow path within the battery housing, allowing for enhanced cooling, improved particle separation, and more efficient gas evacuation before reaching the venting outlet.

Optionally, in some examples, including in at least one preferred example, each battery cell comprises vents on opposing sides of the battery housing, and wherein each of the opposing sides of the battery housing comprises a venting channel arranged in fluid communication with the corresponding vents. A technical benefit may include allowing symmetrical venting and balancing the exhaust gas distribution within the housing, preventing localized overheating and enhancing the structural integrity of the battery pack during a thermal runaway event.

Optionally, in some examples, including in at least one preferred example, each venting channel on opposing sides of the battery housing is symmetrically arranged and connected to a common venting outlet. A technical benefit may include ensuring that exhaust gas is uniformly directed toward the venting outlet from both sides of the battery housing, reducing pressure imbalances and optimizing gas evacuation efficiency.

Optionally, in some examples, including in at least one preferred example, the venting outlet comprises a pressure-controlled valve configured to open when a threshold pressure is reached inside the second channel portion. A technical benefit may include preventing premature or excessive venting by ensuring that gas is expelled only when necessary, thereby improving the controlled release of exhaust gases and minimizing the risk of sudden pressure surges.

Optionally, in some examples, including in at least one preferred example, the battery cells are blade cells arranged in a single layer. A technical benefit may include enabling a compact and space-efficient battery pack design while ensuring effective venting and heat dissipation, particularly in applications where a low-profile battery housing is preferred.

Optionally, in some examples, including in at least one preferred example, the first channel portion is closed at the side of the venting outlet to prevent direct passage of exhaust gas from the first channel portion to the venting outlet. A technical benefit may include forcing the exhaust gas to pass through the second channel portion before reaching the venting outlet, thereby improving gas flow control and enhancing particle filtration efficiency.

Optionally, in some examples, including in at least one preferred example, the venting channels on opposing sides of the battery housing are connected at a side of the battery housing opposite the location of the venting outlet, forming a fluid connection at the side to guide exhaust gas from both opposing sides of the battery housing toward the venting outlet. A technical benefit may include creating a balanced and coordinated venting system that ensures consistent gas flow from both sides, reducing localized pressure buildup and improving overall venting performance.

Optionally, in some examples, including in at least one preferred example, the side of the battery housing opposite the location of the venting outlet comprises particle trapping structures, the particle trapping structures being configured to have a uniform particle trapping size. A technical benefit may include maintaining consistent filtration performance across the entire venting system by ensuring that particle trapping structures at the fluid connection are uniformly sized, thereby preventing variations in flow resistance and reducing the risk of clogging.

Optionally, in some examples, including in at least one preferred example, the battery housing comprises a protective enclosure arranged to shield a bus bar of the battery cells from exposure to exhaust gas and particles. A technical benefit may include increasing the safety and longevity of the battery system by preventing corrosive or conductive particles from coming into contact with the bus bars, reducing the risk of electrical failure or degradation over time.

According to a second aspect, it is provided a vehicle comprising a battery housing according to any one of the preceding examples. A technical benefit may include integrating a battery housing with optimized thermal runaway management into a vehicle, enhancing overall vehicle safety and reliability. By incorporating a structured venting system within the battery housing, the vehicle can better manage exhaust gases and particles during thermal events, reducing the risk of fire propagation and component damage.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
FIG. 1 is an exemplary battery housing illustrating a venting channel according to an example.
FIG. 2 is another view of an exemplary battery housing illustrating a venting channel according to an example.
FIG. 3 is an exemplary battery housing illustrating a venting channel according to an example.
FIG. 4 is a vehicle comprising a battery housing according to an example.

### DETAILED DESCRIPTION

The detailed description set forth below provides information and examples of the disclosed technology with sufficient detail to enable those skilled in the art to practice the disclosure.

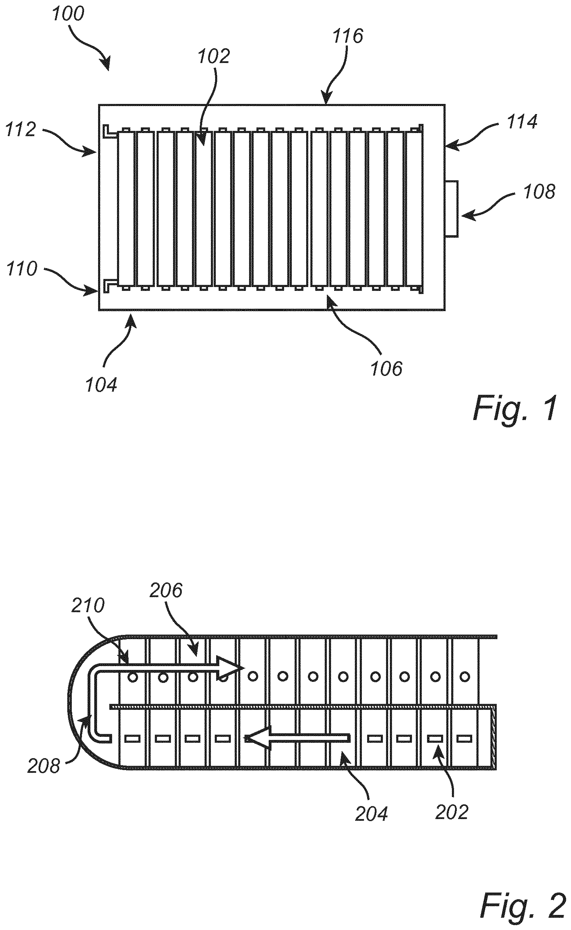

Fig. 1 illustrates an exemplary battery housing 100 designed to manage the controlled release and evacuation of exhaust gases generated during a thermal runaway event in a plurality of battery cells 102. In particular, Fig. 1 is a top cross-sectional view of the battery hosing showing the arrangement of battery cells 102 from above. The battery housing 100 is configured to optimize gas flow direction, improve safety, and prevent uncontrolled gas accumulation by incorporating a venting channel 106 that facilitates the removal of exhaust gases from the battery cells 102.

Each battery cell 102 within the battery housing 100 includes a vent 202 that is positioned to face a first side 104 of the battery housing 100. This vent 202 arrangement allows for a directed release of exhaust gases toward the venting channel 106, ensuring that gas evacuation occurs in a controlled manner rather than dispersing unpredictably within the battery housing 100. The venting channel 106 is positioned along the first side 104 of the battery housing 100 and is designed to guide exhaust gases from the battery cells 102 toward a venting outlet 108.

As further illustrated in the side cross sectional view of Fig. 2, the venting channel 106 comprises two portions, a first channel portion 204, which is arranged to directly receive exhaust gas from the vents 202 of the battery cells 102, and a second channel portion 206, which is configured to transport the collected exhaust gas toward the venting outlet 108. The cross section of Fig. 2 is taken to cut vertically through the venting channel 106, showing the end surfaces of the battery cells 102. Accordingly, the Fig. 2 illustrates that the venting channel 106 is sectioned by the separation into a first channel portion 204 and a second channel portion 206.

The first channel portion 204 and second channel portion 206 are fluidly separated along part of their length, meaning that direct gas flow between them is restricted except at a designated connection point. This separation allows for controlled gas movement and minimizes the risk of backflow, which could otherwise reintroduce heated gases into the area where gas is ejected from battery cells 102.

A fluid connection 208 between the first channel portion 204 and the second channel portion 206 is formed at an edge portion 110 of the first side 104 of the battery housing 100. By positioning the fluid connection 208 at the edge portion 110, the system maximizes the efficiency of gas flow while maintaining a compact battery housing 100 design.

In the example illustrated in Fig. 2 the first channel portion 204 is configured to be a lower channel portion, and the second channel portion 206 is configured to be an upper channel portion, leading to an advantageous chimney effect facilitating gas flow from the first channel portion 204 to the second channel portion 206 and on towards the venting outlet 108.

As shown in Fig. 2, the battery cells 102 are positioned so that the battery cell terminals 210 face the second channel portion 206 of the venting channel 106. This orientation keeps the terminals 210 away from the direct exhaust gas flow, reducing exposure to high temperatures and particle contamination. By shielding the electrical connections from extreme conditions, this configuration enhances the safety and longevity of the battery housing 100.

Moreover, the fluid connection 208 between the first channel portion 204 and the second channel portion 206 is placed on a side 112 of the battery housing 100, opposite the venting outlet 108, as illustrated in Fig. 1. With this layout, the exhaust gas is guided along an extended flow path before reaching the venting outlet 108, maximizing cooling time and improving particle separation. Additionally, positioning the fluid connection 208 at the side 112 opposite the venting outlet prevents direct escape of gases from the first channel portion 204, ensuring they pass through the second channel portion 206 for controlled processing.

Each battery cell 102 may feature vents 202 facing both opposing sides 104, 116 of the battery housing 100. Corresponding venting channels 106 are positioned on both sides 104, 116, ensuring that the exhaust gases are efficiently collected and directed away from the battery cells 102. This dual-channel configuration balances gas distribution, reducing pressure differences within the housing while improving thermal management and structural integrity.

Further illustrated in Figs. 1 and 2, the venting channels 106 on both sides 104, 116 are symmetrically arranged and connected to a common venting outlet 108. This symmetrical design ensures even gas evacuation, preventing imbalances that could lead to localized overheating or inefficiencies in the venting process. By converging into a single venting outlet 108, the system simplifies exhaust handling while maintaining a controlled and efficient release of gases.

To further regulate exhaust gas flow, the venting outlet 108 may include a pressure-controlled valve designed to open only when the pressure inside the second channel portion 206 reaches a predetermined threshold. Such a mechanism ensures that gases are expelled in a controlled manner, preventing sudden pressure drops or premature venting. This contributes to a more stable operating environment within the battery housing 100 while enhancing overall system safety.

The layout depicted in Fig. 1 employs a single-layer arrangement of blade cells 102 within the battery housing 100. This compact configuration optimizes heat dissipation and ensures uniform thermal distribution across the battery pack. A single-layer structure also allows for efficient packaging, making the battery housing 100 well-suited for applications where space constraints are a concern, such as electric vehicles or industrial energy storage systems.

Turning again to Fig. 2, the first channel portion 204 is closed at the side of the venting outlet 108, preventing direct passage of exhaust gas. Instead, gases must pass through the second channel portion 206 before reaching the venting outlet 108. This design enhances particle filtration and heat dissipation, ensuring that the gases are properly cooled and filtered before exiting the battery housing 100. By enforcing this extended flow path, the risk of clogging or ignition at the venting outlet 108 is minimized.

Fig. 1 further illustrates that the venting channels 106 on opposing sides 104 and 116 of the battery housing 100 are connected at a side 112 opposite the venting outlet 108, forming a fluid connection 208. This setup ensures that gases from both sides 104 and 116 are collected and directed efficiently toward the venting outlet 108, promoting balanced exhaust flow. By unifying the venting paths at the side 112, the design optimizes thermal management and prevents uneven gas accumulation, contributing to a more effective and reliable venting system.

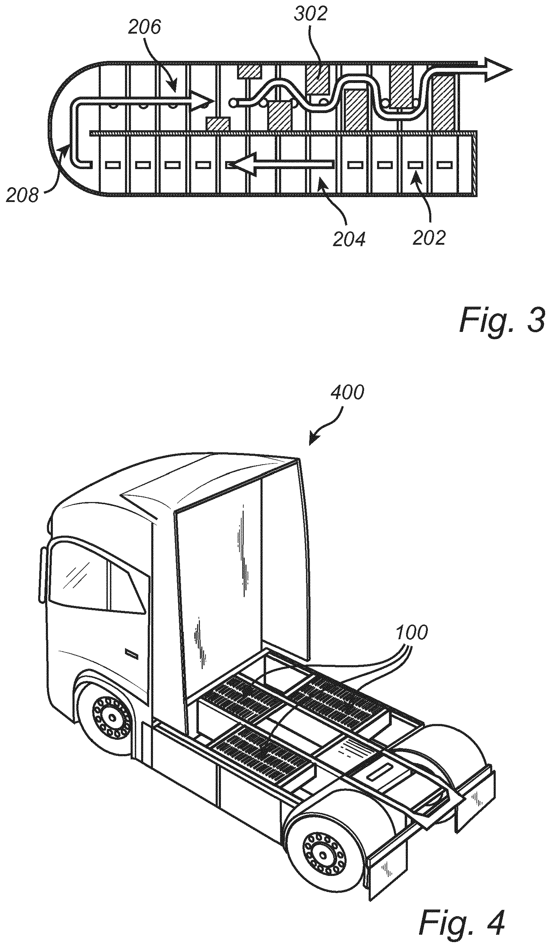

Fig. 3 illustrates an example where the second channel portion 206 incorporates particle trapping structures 302 designed to prevent particles in the exhaust gas from reaching the venting outlet 108. These structures effectively capture solid particles carried by the gas flow, reducing the risk of debris accumulation at the venting outlet 108. By filtering out particles before expulsion, the system enhances operational reliability and minimizes the potential for external ignition caused by flammable particles escaping the battery housing 100.

**In** Fig. 3, the second channel portion 206 is shown guiding the exhaust gas along a serpentine or curved path achieved by particle trapping structures extending vertically from the floor and roof of the second channel portion 206. It would in principle be equally possible to arrange the particle trapping structures alternatingly on the two sidewalls of the second channel portion 206, thereby achieving a curved path for the gas flow. This extended flow path slows down the gas velocity, allowing more time for particles to settle and be trapped by the particle trapping structures 302. By reducing gas speed and encouraging particle deposition, the design improves filtration efficiency and prevents excessive buildup of contaminants at the venting outlet 108.

Fig. 3 further illustrates how the particle trapping structures 302 are configured to induce vortices in the exhaust gas flow by extending into the gas flow path. These vortex-inducing elements disrupt the linear flow of gas, forcing particles to change direction repeatedly. As a result, heavier particles lose momentum and become trapped within the second channel portion 206 before reaching the venting outlet 108. This mechanism significantly enhances the effectiveness of the venting system by ensuring that only filtered gas is expelled.

To optimize filtration further, Fig. 3 shows that the particle trapping structures 302 are arranged in a series, capturing particles of decreasing size along the flow direction of the second channel portion 206. Larger particles are intercepted first, preventing them from obstructing downstream filters, while progressively smaller particles are captured further along the path. This staged filtration approach maintains consistent gas flow through the venting channel 106 and minimizes the risk of clogging. The particle trapping structures may in some examples include grids or similar elements to further enhance particle trapping efficiency.

The particle trapping structures 302 in Fig. 3 may be made from thermal-resistant materials such as plastic, ceramic, aluminum, or steel. The use of heat-resistant materials ensures that the structures remain functional even under high temperatures generated during a thermal runaway event. Selecting appropriate materials enhances durability and prevents deformation, allowing the trapping structures 302 to maintain their efficiency over time.

As illustrated in Fig. 3 the particle trapping structures may include vertically aligned ridges protruding from the sidewalls of the second channel portion 206. These ridges alternate between opposing walls, forming an overlapping configuration that increases turbulence within the gas flow. The alternating ridges force the gas to follow a non-linear path, enhancing the probability of particle capture. By introducing controlled turbulence, the design ensures that particles are more effectively separated from the exhaust gas before it reaches the venting outlet 108.

The venting channel 106 may further comprise heat-dissipating surfaces integrated into the second channel portion 206. These surfaces may be strategically placed to reduce the temperature of the exhaust gas before it exits through the venting outlet 108. By dissipating heat along the flow path, the design may prevent excessive temperatures from reaching external components, reducing thermal stress on the surrounding environment and improving overall system safety.

Fig. 4 schematically illustrates a vehicle 400 including a battery housing 100 that ensures controlled gas evacuation and thermal management during a thermal runaway event. The structured venting system in the battery housing of the battery housing 100 directs exhaust gases safely, preventing heat buildup and particle dispersion within the vehicle 400. This integration enhances the safety, reliability, and operational stability of the vehicle 400 while optimizing space and cooling efficiency.

Example 1. A battery housing (100) comprising: a plurality of battery cells (102), each battery cell having a vent (202) positioned to face a first side (104) of the battery housing for releasing exhaust gas during a thermal runaway event; and a venting channel (106) arranged at the first side of the battery housing and configured to guide exhaust gas from the battery cells toward a venting outlet (108) of the battery housing; wherein the venting channel comprises a first channel portion (204) arranged to directly receive exhaust gas from the vents of the battery cells, and a second channel portion (206) arranged to transport exhaust gas to the venting outlet, the second channel portion being fluidly separated from the first channel portion along part of its length; and wherein a fluid connection (208) between the first and second channel portions is formed at an edge portion (110) of the first side of the battery housing.

Example 2. The battery housing according to example 1, wherein the first channel portion is configured to be a lower channel portion, and the second channel portion is configured to be an upper channel portion.

Example 3. The battery housing according to example 1 or 2, wherein the second channel portion comprises particle trapping structures (302) configured to prevent particles in exhaust gas from reaching the venting outlet.

Example 4. The battery housing according to example 3, wherein the second channel portion is configured to guide the exhaust gas along a serpentine or curved path to slow down the gas flow and enhance particle trapping.

Example 5. The battery housing according to example 3 or 4, wherein the particle trapping structures in the second channel portion are configured to induce vortices in the exhaust gas flow to direct particles toward the particle trapping structures. Example 6. The battery housing according to any one of examples 3 to 5, wherein the particle trapping structures comprise a series of structures arranged to capture particles of decreasing size along the flow direction of the second channel portion.

Example 7. The battery housing according to any one of examples 3 to 6, wherein the particle trapping structures are made from a thermal-resistant material selected from the group consisting of plastic, ceramic, aluminum, and steel.

Example 8. The battery housing according to any one of examples 3 to 7, wherein the particle trapping structures comprise vertically aligned ridges protruding from sidewalls of the second channel portion and alternatingly extending from opposing walls to form an overlapping configuration adapted to increase turbulence and enhance particle trapping efficiency.

Example 9. The battery housing according to any one of the preceding examples, wherein the second channel portion comprises heat-dissipating surfaces arranged to reduce the temperature of the exhaust gas before it reaches the venting outlet.

Example 10. The battery housing according to any one of the preceding examples, wherein the battery cells are configured so that battery cell terminals (210) are facing the second channel portion of the venting channel.

Example 11. The battery housing according to any one of the preceding examples, wherein the fluid connection between the first and second channel portions is located on a side (112) of the battery housing opposite the location of the venting outlet.

Example 12. The battery housing according to any one of the preceding examples, wherein each battery cell comprises vents (202) on opposing sides (104, 116) of the battery housing, and wherein each of the opposing sides of the battery housing comprises a venting channel arranged in fluid communication with the corresponding vents.

Example 13. The battery housing according to example 12, wherein each venting channel on opposing sides of the battery housing is symmetrically arranged and connected to a common venting outlet.

Example 14. The battery housing according to any one of the preceding examples, wherein the venting outlet comprises a pressure-controlled valve configured to open when a threshold pressure is reached inside the second channel portion.

Example 15. The battery housing according to any of the preceding examples, wherein the battery cells are blade cells arranged in a single layer.

Example 16. The battery housing according to any one of the preceding examples, wherein the first channel portion is closed at the side of the venting outlet to prevent direct passage of exhaust gas from the first channel portion to the venting outlet.

Example 17. The battery housing according to example 12 or 13, wherein the venting channels on opposing sides of the battery housing are connected at a side (112) of the battery housing opposite the location of the venting outlet, forming a fluid connection at the side to guide exhaust gas from both opposing sides (104, 116) of the battery housing toward the venting outlet.

Example 18. The battery housing according to example 17, wherein the side (112) of the battery housing opposite the location of the venting outlet comprises particle trapping structures, the particle trapping structures being configured to have a uniform particle trapping size.

Example 19. The battery housing according to any one of the preceding examples, wherein the battery housing comprises a protective enclosure arranged to shield a bus bar of the battery cells from exposure to exhaust gas and particles.

Example 20. A vehicle (400) comprising a battery housing (100) according to any one of the preceding examples.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A battery housing (100) comprising:
a plurality of battery cells (102), each battery cell having a vent (202) positioned to face a first side (104) of the battery housing for releasing exhaust gas during a thermal runaway event; and
a venting channel (106) arranged at the first side of the battery housing and configured to guide exhaust gas from the battery cells toward a venting outlet (108) of the battery housing;
wherein the venting channel comprises a first channel portion (204) arranged to directly receive exhaust gas from the vents of the battery cells, and a second channel portion (206) arranged to transport exhaust gas to the venting outlet, the second channel portion being fluidly separated from the first channel portion along part of its length; and wherein a fluid connection (208) between the first and second channel portions is formed at an edge portion (110) of the first side of the battery housing.

2. The battery housing according to claim 1, wherein the first channel portion is configured to be a lower channel portion, and the second channel portion is configured to be an upper channel portion.

3. The battery housing according to claim 1 or 2, wherein the second channel portion comprises particle trapping structures (302) configured to prevent particles in exhaust gas from reaching the venting outlet.

4. The battery housing according to claim 3, wherein the second channel portion is configured to guide the exhaust gas along a serpentine or curved path to slow down the gas flow and enhance particle trapping.

5. The battery housing according to claim 3 or 4, wherein the particle trapping structures in the second channel portion are configured to induce vortices in the exhaust gas flow to direct particles toward the particle trapping structures.

6. The battery housing according to any one of claims 3 to 5, wherein the particle trapping structures comprise a series of structures arranged to capture particles of decreasing size along the flow direction of the second channel portion.

7. The battery housing according to any one of claims 3 to 6, wherein the particle trapping structures comprise vertically aligned ridges protruding from sidewalls of the second channel portion and alternatingly extending from opposing walls to form an overlapping configuration adapted to increase turbulence and enhance particle trapping efficiency.

8. The battery housing according to any one of the preceding claims, wherein the second channel portion comprises heat-dissipating surfaces arranged to reduce the temperature of the exhaust gas before it reaches the venting outlet.

9. The battery housing according to any one of the preceding claims, wherein the battery cells are configured so that battery cell terminals (210) are facing the second channel portion of the venting channel.

10. The battery housing according to any one of the preceding claims, wherein each battery cell comprises vents (202) on opposing sides (104, 116) of the battery housing, and wherein each of the opposing sides of the battery housing comprises a venting channel arranged in fluid communication with the corresponding vents.

11. The battery housing according to claim 10, wherein each venting channel on opposing sides of the battery housing is symmetrically arranged and connected to a common venting outlet.

12. The battery housing according to any one of the preceding claims, wherein the first channel portion is closed at the side of the venting outlet to prevent direct passage of exhaust gas from the first channel portion to the venting outlet.

13. The battery housing according to claim 10 or 11, wherein the venting channels on opposing sides of the battery housing are connected at a side (112) of the battery housing opposite the location of the venting outlet, forming a fluid connection at the side to guide exhaust gas from both opposing sides (104, 116) of the battery housing toward the venting outlet.

14. The battery housing according to claim 13, wherein the side (112) of the battery housing opposite the location of the venting outlet comprises particle trapping structures, the particle trapping structures being configured to have a uniform particle trapping size.

15. A vehicle (400) comprising a battery housing (100) according to any one of the preceding claims.
